# FASCICULE DE BREVET EUROPEEN

(11) **EP 1 048 352 B1**
(45) Date de publication et mention de la délivrance du brevet: **21.12.2005**
(21) Numéro de dépôt: 00430013.3
(22) Date de dépôt: 30.03.2000
(51) Int. Cl.: B02C 18/00

(54) **Procédé de collecte et de destruction mobile de papier**
Verfahren zum mobilen Sammlen und Zerkleinern von Papier
Mobile paper collecting and shredding procedure

(30) Priorité: 30.04.1999 FR 9905667
(43) Date de publication de la demande: 02.11.2000
(73) Titulaire: Beaver S.a.r.l., 13008 Marseille (FR)
(72) Inventeur: Delbes, Laurent, 13012 Marseille (FR); Armenante, Richard, 13005 Marseille (FR); Cordesse, Jean-Patrick, 13008 Marseille (FR)
(74) Mandataire: Domange, Maxime

(56) Documents cités:
- DE-A- 3 025 631
- US-A- 5 054 623
- US-A- 5 542 617

## Description

La présente invention a pour objet des procédés et des dispositifs permettant la collecte et la destruction de papier.

Le secteur technique de l'invention est le domaine du ramassage des détritus papier par des véhicules spécifiques, ainsi que le broyage dudit papier pour le détruire et permettre son recyclage.

L'application principale de l'invention est de pouvoir garantir la confidentialité des documents papier collectés aussi bien avant leur destruction qu'après celle-ci en respectant des normes minimales de sécurité telles que celles définies par la norme allemande DIN 32757 du 01/03/94 pour la destruction de supports d'informations et suivant laquelle il est défini des degrés de sécurité, dont le niveau 3 pour documents confidentiels est l'objectif de la présente invention.

Il n'existe pas en effet à ce jour de procédé et de système intégré permettant de garantir une telle confidentialité entre le client qui veut se débarrasser de ses papiers confidentiels et l'usine de traitement final. En effet, à l'heure actuelle et surtout en France, les personnes qui veulent se débarrasser de documents n'ont d'autres choix que soit de les déposer dans leur poubelle de ville, soit de les stocker dans des conteneurs de huit à dix mètres cubes, spécifiques au ramassage du papier et pouvant être mis à disposition en certains endroits par des sociétés spécialisées, soit encore de faire appel, pour des documents spécifiques tels que par exemple les chèques ou autres documents confidentiels à des Sociétés de transport spécialisées qui déplaceront les documents sous bonne escorte jusqu'à l'unité de destruction et/ou de recyclage.

Cette dernière solution est efficace au niveau de la confidentialité mais coûte très cher et les deux autres solutions n'offrent aucune garantie de confidentialité : de plus le papier ainsi récupéré est assez souvent brûlé ou jeté en décharge, car il n'est pas réutilisable en tant que tel. Ainsi en France seulement 3 % du papier administratif est récupéré pour être recyclé, et au moins 1 million de tonnes de papier n'est pas réutilisé, obligeant notre pays à importer de grandes quantités de papier (source ADEME : Agence de l'environnement et de la maitrise de l'énergie).

Aux Etats Unis et surtout en Allemagne où il est interdit de stocker de grandes poubelles ou conteneurs dans la rue, les consommateurs de papier doivent les stocker chez eux et faire venir, à la demande, des sociétés spécialisées disposant d'unités mobiles installées dans des camions dotés de broyeur et permettant de constituer des blocs de papier qui sont ensuite empilés dans ledit camion :une telle unité nécessite des équipements lourds, avec des groupes électrogènes et des équipes de trois personnes, et ne garantit pas la confidentialité puisque le stockage avant ramassage est laissé à l'initiative des utilisateurs : de plus la capacité de transport dans lesdits camions et la quantité de papier détruits dans ceux ci sont très faibles.

On pourrait également citer diverses demandes de brevet décrivant des telles unités mobiles de récupération et de traitement de déchets tels que : la demande de brevet FR 2 739 363 publiée le 4/04/97 qui décrit un procédé selon lequel on effectue un ramassage de cartons au moyen d'un véhicule comportant une plate-forme équipée au moins d'un broyeur et d'un compacteur en milieu humide ; le brevet EP 330 605 publié le 30/08/89 d'origine allemande qui décrit une installation mobile pour le déchiquetage et l'enlèvement de documents avec un bras télescopique permettant l'aspiration de ces documents depuis un lieu de stockage.

Le brevet US-A-5542617 décrit un dispositif de déchiquetage de papier installé dans un camion comportant un broyeur motorisé et une auge de chargement de papier vers le broyeur, le papier détruit étant stocké dans un conteneur qui est transféré au broyeur et son contenu est stocké dans un compartiment du camion.

Le document DE-A-3025631 décrit un procédé de destruction de documents confidentiels dans lequel lesdits documents sont stockés dans des containers sécurisés dont le vidage est effectué de façon automatique directement sur le lieu de destruction desdits documents.

Les objectifs de la présente invention sont alois de pouvoir collecter tout type de documents auprès de tout consommateur et producteur de ces documents qui souhaiterait préserver leur confidentialité, puis de les détruire en garantissant au client utilisateur que ces documents n'ont pas pu tomber entre d'autres mains que celles de l'opérateur chargé de leur collecte et destruction, ladite destruction devant elle-même respecter des normes de confidentialité tout en permettant le recyclage dudit papier.

Une solution au problème posé est un procédé de collecte et de destruction mobile de papier utilisant un véhicule de type comportant un broyeur et un compacteur que l'on alimente au fur et à mesure du ramassage suivant l'invention tel que défini dans la revendication 1.

Pour permettre le recyclage dudit papier ainsi collecté et broyé, ledit broyage et en fait un « grignotage » permettant de réaliser des particules de papier dont chaque dimension est au moins de six à vingt millimètres ; en effet, il s'est avéré qu'en dessous de six millimètres, d'une part lesdites particules ne seraient pas recyclables et d'autre part il ne serait plus alors possible de constituer des balles de papier qui se tiennent par elles même alors que selon la présente invention, on réalise de telles balles d'au moins 500 kg à partir desdites particules compactées de papier broyé, afin d'en faciliter la manutention lorsque l'on vide le compartiment dudit véhicule et que l'on veut les stocker et les transporter en d'autres endroits de l'usine de traitement.

Avec une telle dimension, de six à vingt millimètres, des particules tel qu'explicité ci-dessus, la confidentialité, au moins de degré 3 suivant la norme précitée, peut être respectée grâce au compactage réalisé suivant la présente invention en mélangeant et en pressant les particules après qu'elles aient été broyées.

Le choix d'une technique de broyage par grignotage permet de pouvoir détruire des documents de grandes épaisseurs tels que par exemple les dictionnaires, les annuaires...

Dans un mode préférentiel de réalisation, préalablement au stockage des papiers dans les consoles de sécurité, on préstocke lesdits papiers dans des accessoires de bureaux individuels qui peuvent être alors disposés dans chaque pièce on l'on peut avoir à déclasser des papier, alors que les consoles de sécurité peuvent être disposées dans des parties communes.

Le résultat est de nouveaux procédés et moyens permettant de mettre en oeuvre ledit procédé pour la collecte et la destruction mobile de papier, et garantissant en toute sécurité sa confidentialité dans toutes les phases du procédé. De plus grâce aux dispositifs spécifiques de l'invention tels que décrit ci-après, on peut arriver à traiter de l'ordre de 600 Kg à l'heure dans chaque unité mobile avec un prix de vente aussi bien pour le broyage que pour l'ensemble du procédé suivant l'invention, qui est très inférieur aux coûts pratiqués d'une part avec les unités mobiles connues à ce jour pour la seule phase de broyage, et d'autre part si on tenait compte de tous les frais de personnel et de moyens nécessaires jusqu'à ce jour pour ramasser le papier avant de le broyer. La présente invention apporte une économie globale dans le traitement du papier.

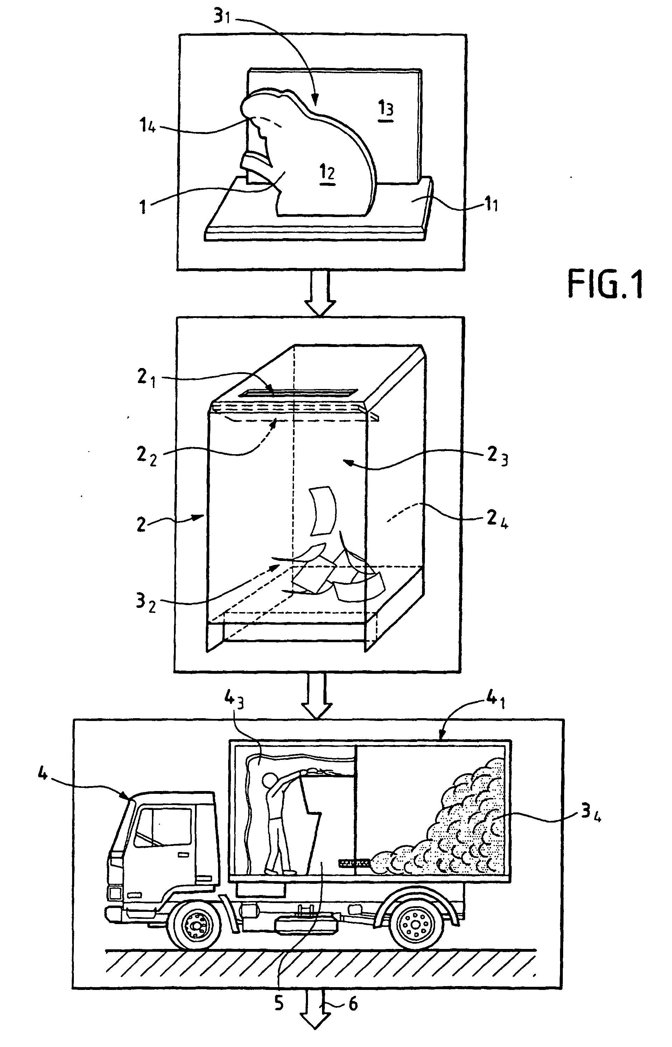

La conception des consoles de sécurité telles que celles respectées dans la figure 1, permet d'intégrer de telles consoles dans du mobilier de bureau et de pouvoir utiliser celles ci comme support d'imprimante, de téléviseur, de machine à café..., justifiant leur dénomination en tant que console, en plus de leur fonction de conteneur recevant ledit papier à détruire.

On pourrait citer d'autres avantages à la présente invention mais ceux cités ci-dessus en montrent déjà suffisamment pour en prouver la nouveauté et l'intérêt. La description et les dessins ci-après représentent un exemple de réalisation de l'invention mais n'ont aucun caractère limitatif : d'autres réalisations sont possibles dans le cadre de la portée et de l'étendue de cette invention en particulier en changeant la forme des accessoires de bureaux et/ou des consoles de sécurité ainsi que la disposition des moyens de destruction dans le véhicule mobile.

La figure 1 est une vue schématique des différents moyens utilisés lors des différentes étapes du procédé suivant l'invention tel que décrit précédemment.

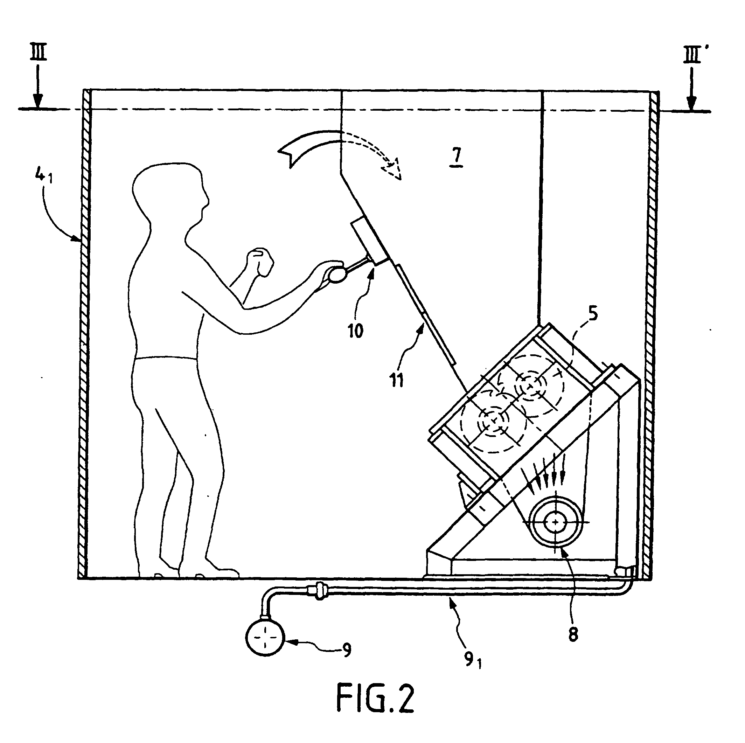

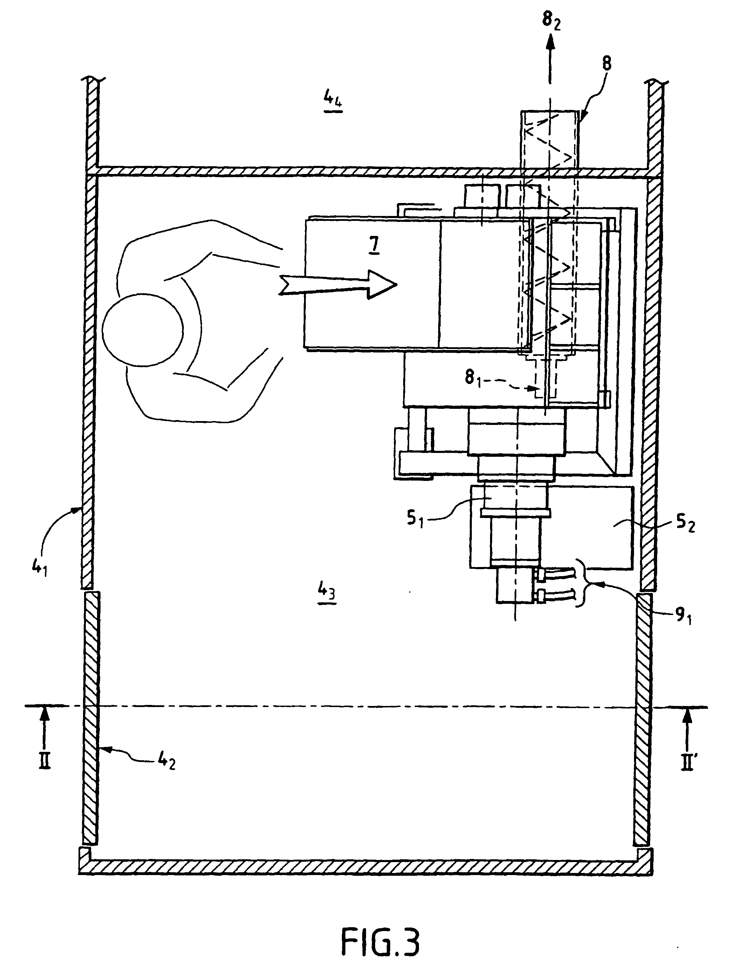

La figure 2 est une vue en coupe, suivant II, II' de la figure 3, du véhicule de collecte et de destruction du papier.

La figure 3 est une vue en coupe suivant III, III' d'une partie des compartiments du véhicule suivant la figure 2.

Tel que représenté sur la figure 1 on commence par pré-stocker les papiers que l'utilisateur considère comme confidentiel et devant être détruits, dans des accessoires de bureau individuels 1 disposés dans chaque pièce où l'on peut avoir à déclasser des papiers : lesdits accessoires de bureau sont constitués chacun d'un socle 1₁ et de deux parois verticales 1₂, 1₃ formant un logement 1₄ entre elles, ouvert vers le haut et apte à recevoir les papiers 3₁ à détruire non froissés et en attente d'être mis ensuite en console de sécurité 2.

Lesdites consoles de sécurité 2 comportent chacune une fente 2₁ sur leur face supérieure apte à ce que l'on y glisse lesdits papiers 3₁ non froissés, un déflecteur 2₂ situé en dessous de ladite fente 2₁ et une porte latérale 2₃ apte à ce que ladite personne autorisée sorte de ladite console un sac préalablement disposé et ouvert sous ladite fente 2₁ et dans lequel ont été stockés 3₂ lesdits papiers après avoir été glissés dans ladite fente 2₁ ; ladite fente 2₁ peut être suffisamment large pour y glisser des documents épais tels que des listing informatiques, des annuaires....

Lesdites consoles sont sécurisées, tel que par exemple fermées à clé ou dotées de tout type de serrure à codes ou à carte... et permettent de recevoir par exemple des sacs de 50 Kg : le contenu 3₂ de ces consoles est récupéré ensuite de manière périodique en toute confidentialité puisque seul l'opérateur avec lequel la société cliente et utilisatrice a signé le contrat correspondant, dispose des moyens tels que des clés ou cartes pour ouvrir lesdites consoles 2 ; celles ci sont codifiées et identifiables de même que les sacs qu'elles contiennent tel que par code barres ou autres moyens d'identification. Pour l'utilisateur et les employés de celui ci, de telles consoles sont faciles à utiliser puisqu'il suffit d'y déposer les papiers en les glissant dans ladite fente 2₁.

Lors du ramassage des sacs contenus dans lesdites consoles, le poids, et la qualité des documents ainsi que le temps de ramassage peuvent être relevés informatiquement ; on dépose alors lesdits papiers 3 ramassés depuis les consoles de sécurité 2 dans une trémie 7 située dans un compartiment du véhicule 4 et au dessous de laquelle est disposé le broyeur 5 : on relève également le temps de broyage de chaque contenu 32 de sac issu des consoles 2 de sécurité, ce qui permet non seulement d'établir immédiatement la facture, mais également d'assurer tous les contrôles nécessaires à la garantie de la confidentialité ; en effet, à l'issue de cette dernière phase de destruction/compactage, un certificat remis au client utilisateur lui permet alors de vérifier que l'ensemble des documents qu'il a mis dans ces consoles correspond bien à ce qui a été détruit : il dispose de cette information immédiatement avec la plus grande transparence possible, puisque tout est fait sur le lieu de la collecte et proche de l'utilisateur client.

Après avoir été déposés dans la trémie 7, les papiers sont broyés par d'une part un dispositif à couteaux 5 qui déchiquette et grignote ces papiers, et d'autre part une vis sans fin 8 située sous ledit broyeur à couteaux 5 et qui mélange et presse les particules de papier ainsi broyées et les pousse dans le compartiment 4₄, qui peut être situé à l'arrière du véhicule 4, soit de l'autre côté de la cloison du compartiment 43 dans lequel est située ladite trémie et ledit broyeur.

Celui ci peut comporter deux axes portant 10 à 14 couteaux chacun et tournants contra-rotativement: la largeur de ces couteaux peut être de l'ordre de 10 à 20 mm de large, correspondant à une trémie de l'ordre de 400 à 450 mm de long, chaque couteau pouvant comporter trois dents, lesdits couteaux étant disposés en quinconce, les uns décalés face aux autres afin que chaque dent vienne grignoter le papier qui se présente. Si la largeur des couteaux détermine la largeur des particules de papier, le nombre de dents par couteau détermine la longueur desdites particules.

Celles-ci après avoir été grignotées et entrainées par les dents des couteaux entrecroisés, tombent dans un logement où tourne la vis sans fin 8, qui mélange cesdites particules, les presse les unes contre les autres, les compacte et les pousse 8₂ vers le compartiment 4₄ où elles sont stockées : la longueur de la vis peut être de 75 cm pour un diamètre de 250 mm avec un pas de vis de 125 mm. Lesdites particules de papier 3₄ étant poussées dans ce compartiment fermé 4₄, la totalité du volume de ce compartiment peut être utilisé, améliorant de plus la confidentialité de l'ensemble.

Les divers axes d'entraînement des couteaux et de la vis sans fin sont accouplés à des moteurs hydrauliques 5₁, 8₁ entraînés par un fluide hydraulique 9₁ alimenté depuis une pompe hydraulique 9 accouplée à la prise de force du véhicule 4 et depuis un réservoir tampon hydraulique 5₂. Ladite pompe hydraulique peut être d'une puissance de 125 kw pour une vitesse de rotation de 2300 tours/mn.

La vitesse de rotation desdits arbres d'entraînement du broyeur et de la vis sans fin peut être de 20 à 35 tour/mn, tel que 25 tours/mn pour les axes porte couteaux et 30 tours/mn pour la vis sans fin.

Les moteurs hydrauliques d'entraînement 5₁, 8₁ sont commandés par un levier 10 distributeur à trois positions permettant d'arrêter et de faire même tourner en arrière au moins lesdits couteaux du broyeur 5 en cas de blocage par une pièce dure qui aurait pu se glisser au milieu des papiers.

Une trappe 11 qui peut être réalisée en matériau transparent de type "Plexiglas" permet de contrôler l'intérieur de la trémie 7 et ce qui se passe dans ledit broyeur 5 dont le plan défini par les deux arbres d'entraînement des couteaux est incliné par rapport à l'horizontale pour être d'autant mieux contrôlé depuis ladite trappe 11 qui est elle aussi inclinée suivant la pente de la trémie 7 ; une sécurité peut être associée à l'ouverture de ladite trappe 11 afin d'arrêter automatiquement la rotation dudit broyeur 5.

Le présent procédé suivant l'invention permettant ensuite le recyclage 6 desdites particules de papier, permet de protéger et de sauvegarder l'environnement. De plus, grâce à un outil informatique qui peut être associé au véhicule 4, les informations recueillies sur les papiers collectés et détruits sont disponibles pour les clients et les institutions.

## Revendications

1. Procédé de collecte et de destruction mobile de papier utilisant un véhicule (4) comportant un broyeur (5) et un compacteur (8) que l'on alimente au fur et à mesure du ramassage dans lequel :
- on stocke, les papiers (3) à détruire dans au moins une console de sécurité (2) située chez un client utilisateur, ladite console (2) de sécurité comportant un moyen d'identification,
- on ramasse périodiquement le contenu (3₂) de ladite console (2) de sécurité ladite console ne pouvant être ouverte que par une personne autorisée disposant d'un moyen adapté pour ouvrir ladite console, ce qui garantit la confidentialité,
- on relève lors du ramassage le poids et le temps de ramassage dudit contenu (3₂) de ladite console de manière à identifier celui-ci,
- on transfère ledit contenu (3₂) dans ledit véhicule (4) déplacé à proximité et on l'y détruit par broyage, le temps de broyage étant également relevé, et
- on mélange et on presse après broyage les particules de papier (3₄) obtenues et on pousse celles ci dans un compartiment (4₄) du véhicule,
- on identifie chaque contenu (3₂) ainsi ramassé et broyé par un certificat d'identification remis au client, sur lequel figurent les informations relevées lors du ramassage et du broyage) ledit certificat permettant au dit client de vérifier que l'ensemble des documents qu'il a mis dans ladite console correspond bien à ce qui a été détruit.

2. Procédé suivant la revendication 1 **caractérisé en ce qu'**après destruction et identification de chaque contenu (3₂), ramassé dans au moins une console de sécurité (2), on continue le ramassage d'autres contenus de consoles de sécurité (2), au maximum jusqu'à ce que ledit compartiment (4₄) soit plein et on déplace ledit véhicule (4) vers tout site de traitement (6) dudit papier où on vide ledit compartiment (4₄).

3. Procédé selon l'une quelconque des revendications 1 ou 2 **caractérisé en ce que** préalablement au stockage des papiers (3) dans les consoles de sécurité (2), on pré-stocke ces papiers dans des accessoires de bureau individuels (1) disposés dans chaque pièce ou l'on peut avoir à déclasser des papiers.

4. Procédé suivant la revendication 3 **caractérisé en ce que** lesdits accessoires de bureau (1) sont constitués chacun d'un socle (1₁) et de deux parois verticales (1₂, 1₃) formant un logement (14) entre elles ouvert vers le haut et apte à recevoir lesdits papiers (3₁) non froissés.

5. Procédé selon l'une quelconque des revendications 1 à 4 **caractérisé en ce que** les consoles de sécurité (2) comportent chacune une fente (2₁) sur leur face supérieure apte à ce que l'on y glisse lesdits papiers (3₁) non froissés, un déflecteur (2₂) situé en dessous de ladite fente (2₁) et une porte latérale (2₃) apte à ce que ladite personne autorisée sorte de ladite console un sac préalablement disposé et ouvert sous ladite fente (2₁) et dans lequel ont été stockés lesdits papiers (3₂) après avoir été glissés dans ladite fente (2₁).

6. Procédé selon l'une quelconque des revendications 1 à 5 **caractérisé en ce que** dans le véhicule (4) on dépose lesdits papiers (3), ramassés depuis les consoles de sécurité (2), dans une trémie (7) au dessous de laquelle est disposé ledit broyeur (2).

7. Procédé selon l'une quelconque des revendications 1 à 6 **caractérisé en ce qu'**on broie lesdits papiers (3) dans le véhicule (4) avec d'une part un dispositif à couteaux (5) qui déchiquette et grignote les papiers, et d'autre part une vis sans fin (8) située sous ledit broyeur à couteaux (5) et, qui mélange et presse les particules de papier ainsi broyées et les pousse dans le compartiment (4₄).

8. Procédé selon l'une quelconque des revendications 1 à 7 **caractérisé en ce que** l'on grignote lesdits papiers en particules dont chaque dimension est au moins de 6 à 20 mm.

9. Procédé selon l'une quelconque des revendications 1 à 8 **caractérisé en ce qu'**on réalise des balles d'au moins 500 kg environ à partir desdites particules compactées (3₄) de papier broyé.

## Patentansprüche

1. Verfahren zum mobilen Sammeln und Zerkleinern von Papier bei Verwendung eines Fahrzeugs (4), welches eine Zerkleinerungsmaschine (5) und ein Verdichtungsgerät (8) aufweist, das im Laufe des Sammelns gespeist wird, wobei:
- das zu zerkleinernde Papier (3) in mindestens einer Sicherheitskonsole (2) bei einem Kunden, der Nutzer ist, gelagert wird, wobei diese Sicherheitskonsole (2) ein Identifizierungsmittel aufweist,
- der Inhalt (3₂) dieser Sicherheitskonsole (2) in periodischen Abständen eingesammelt wird, wobei diese Konsole nur von einer berechtigten Person geöffnet werden kann, die über ein Mittel zum Öffnen dieser Konsole verfügt, wodurch Vertraulichkeit garantiert wird,
- beim Sammeln das Gewicht und die Sammelzeit des Inhalts (3₂) dieser Konsole zu Identifizierungszwecken erfasst wird,
- dieser Inhalt (3₂) in das besagte Fahrzeug (4) verbracht, das sich in der Nähe befindet, und dort zerkleinert wird, wobei die Zerkleinerungszeit ebenfalls erfasst wird, und
- die erhaltenen Papierteilchen (3₄) nach dem Zerkleinern gemischt und gepresst und in ein Abteil (4₄) des Fahrzeugs gedrückt werden,
- jeder derart gesammelte und zerkleinerte Inhalt (3₂) anhand einer dem Kunden auszuhändigenden Identifikationsbescheinigung identifiziert wird, aus welcher die beim Sammeln und Zerkleinern erfassten Informationen hervorgehen, wobei der Kunde mit dieser Bescheinigung überprüfen kann, dass alle Dokumente, die er in diese Konsole verbracht hatte, dem Zerkleinerten entsprechen.

2. Verfahren nach Anspruch 1, **dadurch gekennzeichnet, dass** nach Zerkleinerung und Identifizierung jedes Inhalts (3₂), der in mindestens einer Sicherheitskonsole (2) gesammelt wurde, das Sammeln anderer Inhalte von Sicherheitskonsolen (2) fortgesetzt wird, maximal bis zur Füllung des besagten Abteils (4₄) und bis das besagte Fahrzeug (4) zu einem anderen Papierverarbeitungsstandort (6) verbracht wird, wo das besagte Abteil (4₄) geleert wird.

3. Verfahren nach einem der vorhergehenden Ansprüche 1 oder 2, **dadurch gekennzeichnet, dass** dieses Papier (3), bevor es in den Sicherheitskonsolen (2) gelagert wird, in individuellem Bürozubehör (1) vorgelagert wird, das in allen Räumen aufgestellt wird, in denen Papier auszusondern ist.

4. Verfahren nach Anspruch 3, **dadurch gekennzeichnet, dass** das besagte Bürozubehör (1) jeweils von einem Sockel (1₁) und zwei senkreichen Wänden (1₂, 1₃) gebildet wird, die eine zwischen ihnen nach oben geöffnete Aufnahme (1₄) formen und das besagte, nicht zerknitterte Papier (3₁) aufnehmen können.

5. Verfahren nach einem der Ansprüche 1 bis 4, **dadurch gekennzeichnet, dass** die Sicherheitskonsolen (2) jeweils einen Schlitz (2₁) auf ihrer Oberseite aufweisen, durch den das besagte, nicht zerknitterte Papier (3₁) hineingeworfen werden kann, eine Ablenkplatte (2₂) unter dem besagten Schlitz (2₁) und eine Seitentür (2₃), durch welche die berechtigte Person aus der besagten Konsole einen zuvor angeordneten Beutel, der unter dem besagten Schlitz (2₁) geöffnet ist, herausnehmen kann, und in dem das besagte Papier (3₂) eingelagert ist, nachdem es durch den besagten Schlitz (2₁) eingeworfen wurde.

6. Verfahren nach einem der Ansprüche 1 bis 5, **dadurch gekennzeichnet, dass** das besagte Papier (3), das aus den Sicherheitskonsolen (2) gesammelt wurde, im Fahrzeug (4) in einen Trichter (7) gefüllt wird, unter dem die besagte Zerkleinerungsmaschine (5) angeordnet ist.

7. Verfahren nach einem der Ansprüche 1 bis 6, **dadurch gekennzeichnet, dass** das besagte Papier (3) im Fahrzeug (4) einerseits mit einer Schneidvorrichtung (5) zerkleinert wird, die das Papier zerreißt und zerlegt, und andererseits mit einer Schnecke (8), die sich unter der besagten Zerkleinerungs-Schneidvorrichtung (5) befindet und welche die derart zerkleinerten Papierteilchen vermischt und presst und sie in das Abteil (4₄) drückt.

8. Verfahren nach einem der Ansprüche 1 bis 7, **dadurch gekennzeichnet, dass** das besagte Papier in Teilchen zerlegt wird, die jeweils eine Abmessung von mindestens 6 bis 20 mm haben.

9. Verfahren nach einem der Ansprüche 1 bis 8, **dadurch gekennzeichnet, dass** aus den besagen kompaktierten Teilchen (3₄) aus zerkleinertem Papier Ballen von mindestens zirka 500 kg presst.

## Claims

1. A mobile method for collecting and destroying paper using a vehicle (4) including a shredder (5) and a compactor (8) which are gradually fed during the collecting process, wherein:
- the pieces of paper (3) to be shredded are stored in at least one security console (2) located at a client user, said security console (2) including an identification means,
- the contents (3₂) of said security console (2) are collected periodically, said security console can only be opened by an authorized person having suitable means for opening said console, which guarantees confidentiality,
- upon collection, the weight and the collection time of said contents (3₂) of said console is noted so as to identify the latter contents,
- said contents (3₂) are transferred to said vehicle (4) moved nearby and destroyed therein by shredding, the shredding time being also noted, and
- the obtained paper particles (3₄) are mixed and pressed after shredding and pushed into a compartment (4₄) of the vehicle,
- each thereby collected and shredded contents (3₂) is identified by an identification certificate handed over to the client, on which the information noted during collection and shredding appears, said certificate allowing the client to check that the whole of the documents which he/she has put in said console actually corresponds to what was destroyed.

2. The method according to claim 1, **characterized in that** after destruction and identification of each contents (3₂), collected in at least one security console (2), collection of other contents of security consoles (2) is continued at the most until said compartment (4₄) is full and said vehicle (4) is moved towards any site (6) for processing said paper where said compartment (4₄) is emptied.

3. The method according to any of claims 1 or 2, **characterized in that**, prior to storing the pieces (3) of paper in the security consoles (2), these pieces of paper are pre-stored in individual office accessories (1) placed in each room where papers may be out of order.

4. The method according to claim 3, **characterized in that** said office accessories (1) each consist of a base (1₁) and of two vertical walls (1₂, 1₃) forming a housing (1₄) between them, open at the top and capable of receiving said uncreased pieces of paper (3₁).

5. The method according to any of claims 1 to 4, **characterized in that** the security consoles (2) each include a slot (2₁) on their upper face so that said uncreased pieces of paper (3₁) may be slipped therein, a deflector (2₂) located below said slot (2₁) and a side door (2₃) so that said authorized person may extract from said console a bag placed beforehand and open under said slot (2₁) and in which said pieces of paper (3₂) were stored after having been slipped into said slot (2₁).

6. The method according to any of claims 1 to 5, **characterized in that** in the vehicle (4) said pieces of paper (3) collected from the security consoles (2) are deposited in a hopper (7) below which said shredder (5) is placed.

7. The method according to any of claims 1 to 6, **characterized in that** said pieces of paper (3) are shredded in the vehicle (4) with a knife device (5) which shreds and nibbles the pieces of paper on the one hand, and with a worm (8) located under said knife shredder (5) and which mixes and presses the thereby shredded paper particles and pushes them into the compartment (4₄).

8. The method according to any of claims 1 to 7, **characterized in that** said particle pieces of paper, each dimension of which is at least 6 to 20 mm, are nibbled.

9. The method according to any of claims 1 to 8, **characterized in that**, bales of at least about 500 kg are made from said compacted particles (3₄) of shredded paper.
